(19)

**Europäisches Patentamt**
**European Patent Office**
**Office européen des brevets**

(11) **EP 1 890 105 A1**

(12) **EUROPEAN PATENT APPLICATION**

(43) Date of publication:
**20.02.2008 Bulletin 2008/08**

(51) Int Cl.:
**G01B 9/02** (2006.01)

(21) Application number: **06016939.8**

(22) Date of filing: **14.08.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Carl Zeiss SMT AG**<br>**73447 Oberkochen (DE)** | (72) Inventor: **Altenberger, Michael**<br>**73431 Aalen (DE)**<br><br>(74) Representative: **Diehl & Partner**<br>**Patentanwälte**<br>**Augustenstrasse 46**<br>**80333 München (DE)** |

(54) **Interferometer apparatus and interferometric method**

(57)    An interferometer apparatus comprises an optical delay section including a light input, a light output, at least two beam splitters disposed in an optical path between the light input and the light output and arranged to provide at least three optical path lengths to the light traversing the optical delay apparatus. An interferometric method comprises directing a beam of measuring light into an optical cavity such that a first portion of the beam of measuring light interacts with an optical element and such that a second portion of the beam of measuring light bypasses the optical element.

Fig 1

EP 1 890 105 A1

**Description**

**Background of the Invention**

**Field of the Invention**

The present invention relates to the field of measuring and manufacturing of optical elements. In particular, the invention relates to an interferometer apparatus for testing various kinds of optical and mechanical elements. Further, the invention relates to a method of testing an optical element having opposite first and second surfaces using an interferometer system, and the invention also relates to a method of manufacturing an optical element having opposite first and second surfaces.

**Brief Description of Related Art**

The optical element may comprise, for example, an optical component such as a lens used in optical systems, such as telescopes used in astronomy and systems used for imaging structures, such as structures formed on a mask reticle, onto a radiation sensitive substrate, such as a resist, in a lithographic method. The success of such optical system is substantially determined by an accuracy with which the optical element can be machined or processed to have a target shape determined by a designer of the optical system. In such manufacture it is necessary to compare a shape of the processed optical surface with its target shape, and to determine differences between the processed and target surfaces. The optical element may then be further processed at those portions where differences between the machined and target surfaces exceed e.g. predefined thresholds.

In order to precisely measure the shapes of the optical surfaces of the optical element, an interferometer apparatus is commonly used. An example of such interferometer apparatus is a Fizeau interferometer. The conventional Fizeau interferometer usually includes a reference surface which is also referred to as a Fizeau surface and which is illuminated with measuring light. A portion of the measuring light is reflected back from the Fizeau surface and directed onto a camera. Another portion of the measuring light traverses the Fizeau surface and is incident on the optical surface under test to be reflected therefrom such that it is also incident on the camera. The light reflected from the Fizeau surface and the light reflected from the reference surface generate an interference pattern on the camera. By analysing this pattern, shape differences between the optical surface and its target shape can be determined in terms of wavelengths of the measuring light at respective locations on the optical surface.

If the optical element has two surfaces which are parallel to each other or which have coinciding centers of curvatures, measuring light reflected from both surfaces will be incident on the detector to interfere with the measuring light reflected from the Fizeau surface. Interference patterns generated from three interfering beams are difficult to analyse with a sufficient precision to determine shape errors of the respective optical surface to a desired accuracy. From US 2004/0190002 A1 there is known a method of suppressing a contribution of a selected optical surface of such optical element to the generated interference pattern by using measuring light of alternating wavelengths.

From international patent application having serial number PCT/EP2006/002434 filed on March 16, 2006 there is known an interferometric method and apparatus which is useful for testing optical elements having first and second surfaces disposed at a distance from each other. The content of this application is included herein by reference.

It has been found that the conventional method of testing and manufacturing an optical element could still be improved to obtain more reliable and more accurate measuring results.

**Summary of the Invention**

The present invention has been accomplished taking the above problems into consideration.

Embodiments of the present invention provide an interferometer apparatus which is suitable for testing an optical element with a relatively high accuracy.

Further embodiments of the present invention provide a method of testing and a method of manufacturing an optical element having first and second optical surfaces.

According to embodiments of the present invention, the interferometer apparatus comprises a light source for generating measuring light of a coherence length; an optical delay section including a light input, a light output, at least two beam splitters disposed in an optical path between the light input and the light output and arranged to provide at least three optical path lengths to light traversing the optical delay apparatus, and at least two actuators to modify at least two of the at least three optical path lengths; a test section including a light input, beam shaping optics to produce a measuring beam directed towards an object disposed on the test piece holder from light received through the light input, a light output receiving light having interacted with the object; and a position sensitive detector including a light detecting surface.

According to exemplary embodiments, the test section is configured to include an optical cavity provided between a first reference surface and a second reference surface, and a test piece holder is arranged such that the optical element is disposed within the cavity when the optical element is mounted on the test piece holder. With the optical element mounted therein, the optical cavity provides plural different optical beam paths. For example, one optical beam path is formed between the first and second reference surfaces, another optical beam path is formed between the first reference surface and a first surface of the optical element facing towards the first reference surface, a further optical beam path is formed between the second reference surface and a second optical surface of the optical element which faces towards the second reference surface, and a still further optical beam path is formed between the first and second surfaces of the optical element. With such arrangement, the optical beam path formed between the first and second reference surfaces has a greater path length than each of the other optical beam paths mentioned above, wherein these other optical beam paths may have different optical path lengths or two of them or all of them may have approximately similar or same optical path lengths.

With the optical delay section providing at least three optical path lengths which can be modified, it is possible to simultaneously compare differences between optical path lengths provided in the test section with differences between optical path lengths provided in the optical delay section using white light interferometry.

According to an exemplary embodiment of the invention, the optical delay section includes three retro reflectors. One or more of the three retro reflectors are moveable relative to the beam splitters to change or modify the optical path lengths provided by the optical delay section. The optical delay section may include a measuring system to precisely determine the optical path lengths and/or optical path lengths differences provided by the optical delay section. It is then possible to move one or more of the retro reflectors until a characteristic measuring signal is detected by the detector, which allows to determine one or more optical path lengths provided by the cavity. Knowledge of the optical path lengths provided by the cavity then allows to determine one or more optical properties of the optical element disposed in the optical cavity. The optical properties may in particular include a distance between the first and second surfaces of the optical element, surface shapes of the first and second surfaces of the optical element and a refractive index of a material of the optical element.

According to a further embodiment of the present invention, a method of manufacturing an optical element comprises testing the optical element with one of the methods illustrated above and processing at least one of the first and second surfaces of the optical element based on light intensities detected by the first and second detector portions. The processing of the optical surface may comprise at least one of milling, grinding, loose abrasive grinding, polishing, ion beam figuring and magneto-rheological figuring. Further, the processing of the optical surface may comprise finishing of the optical surface by applying a coating to the optical surface. The coating may comprise at least one of a reflective coating, an anti-reflective coating and a protective coating.

According to further embodiments of the present invention, a method of performing an interferometric measurement comprises: disposing an object in a beam path of measuring light of an interferometer apparatus, the interferometer apparatus including an optical delay section in the beam path for providing an adjustable optical path length; adjusting the optical path length to a plurality of different values; detecting at least one light intensity at each of the plurality of different values of the optical path length and producing intensity data corresponding to the detected light intensities at the plurality of different values of the optical path length; performing a fitting procedure by adapting a model function to the intensity data, wherein the model function is a function of a value of the optical path difference provided by the optical delay section and at least one additional parameter, wherein the at least one additional parameter is a free parameter subjected to the fitting procedure such that the parameter can be changed for improving an adaption of the model function to the intensity data; and wherein the at least one additional parameter comprises at least one of: a first parameter representing an average wavelength of the measuring light, a second parameter representing a spectral width of the measuring light, and a third parameter representing at least one of the plurality of different values of the optical path length.

**Brief Description of the Drawings**

The foregoing as well as other advantageous features of the invention will be more apparent from the following detailed description of exemplary embodiments of the invention with reference to the accompanying drawings. It is noted that not all possible embodiments of the present invention necessarily exhibit each and every, or any, of the advantages identified herein.

Figure 1      is a schematic illustration of an interferometer system according to an embodiment of the invention;

Figure 2      is an exemplary illustration of an image detected by a camera of the interferometer system shown in Figure 1;

Figure 3      is an exemplary graph showing light intensities detected using the apparatus shown in Figure 1;

Figure 4    is an illustration of a lens having a convex surface mounted in a cavity of the interferometer system shown in Figure 1;

Figure 5    is an illustration of an embodiment of a method for determining a light induced change of optical properties of an optical element using the interferometer system shown in Figure 1;

Figure 6a    is an illustration of a method of determining drifts in a mounting structure of an optical element using the apparatus shown in Figure 1;

Figure 6b    is an exemplary illustration of an image detected when testing the arrangement shown in Figure 6a using the interferometer system shown in Figure 1;

Figure 7a    is an illustration of a further method of determining drifts in a mounting structure of an optical element using the apparatus shown in Figure 1;

Figure 7b    is an exemplary illustration of an image detected when testing the arrangement shown in Figure 7a using the interferometer system shown in Figure 1;

Figure 8a    is an illustration of a still further method of determining drifts in a mounting structure of an optical element using the apparatus shown in Figure 1; and

Figure 8b    is an exemplary illustration of an image detected when testing the arrangement shown in Figure 8a using the interferometer system shown in Figure 1.

## Detailed Description of Exemplary Embodiments

In the exemplary embodiments described below, components that are alike in function and structure are designated as far as possible by alike reference numerals. Therefore, to understand the features of the individual components of a specific embodiment, the descriptions of other embodiments and of the summary of the invention should be referred to.

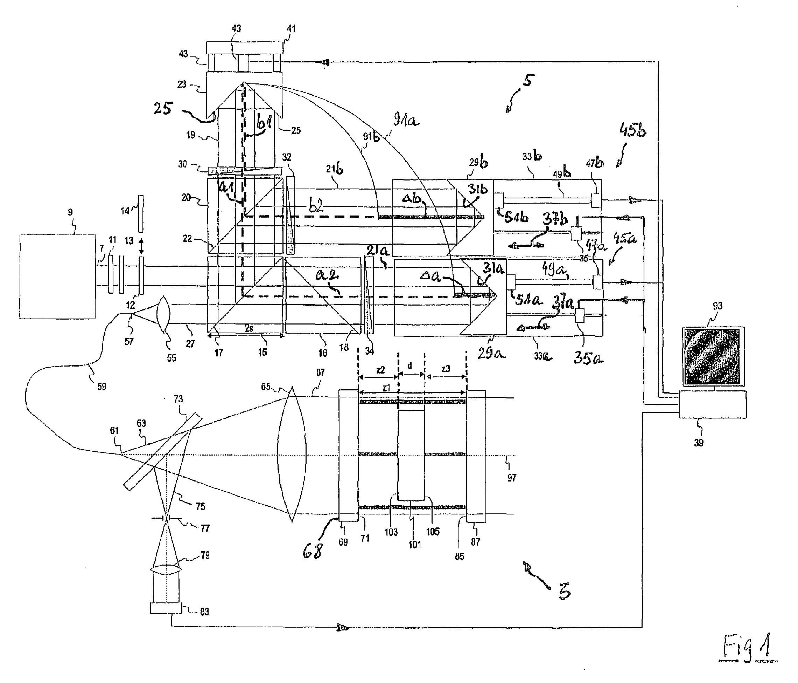

Figure 1 is a schematic illustration of an interferometer system 1 used for testing an optical element 101. The interferometer system 1 comprises as main groups of components a test section 3 and an optical delay section 5. A beam 7 of measuring light is generated by a broad band light source 9, such as a super-luminescence diode and an arc-lamp. In the present embodiment, a halogen lamp is used since it produces a smooth spectrum across a broad wavelength range. The collimated beam 7 traverses a polarizer 11 and a half wave plate 13 for orienting a linear polarization direction of the light of the beam to a desired direction. An interference filter 12 is disposed in the polarized beam to allow only light of a desired wavelength range to traverse through the filter 12. The interference filter 12 can be replaced by a different filter 14 which allows light of a different wavelength range to pass therethrough. Filters 12 and 14 can be mounted together with other interference filters on a filter wheel, for example.

The beam of measuring light having the desired wavelength range determined by the interference filter 12 then enters the optical delay section 5. The optical delay section 5 comprises a first polarizing beam splitter 15 having a beam splitting interface 17 which is traversed by a portion 21a of the incident beam 7 and from which a portion 19 is reflected. The reflected beam portion 19 then enters a second beam splitter 20 having a beam splitting interface 22 which is traversed by a portion of beam 19 and from which another portion 21b is reflected. The beam portion 19 having traversed the second beam splitter 20 is incident on a retro reflector 23 having three reflecting surfaces 25 oriented orthogonally to each other to reflect beam 19 such that beam portion 19 traverses the beam splitter 20 again and enters beam splitter 15 where it is reflected from the interface 17 such that it leaves the optical delay section 5 as a beam 27.

The beam 21a having traversed the interface 17 is reflected from a retro reflector 29a having three reflecting surfaces 31a oriented orthogonally relative to each other and reflected such that the beam 21a enters the beam splitter 15 again such that a portion thereof traverses the interface 17 to coincide with beam 27.

The beam 21b reflected from the interface 22 of beam splitter 20 is reflected from a retro reflector 29b having three reflecting surfaces 31b oriented orthogonally to each other such that the beam 21b enters the beam splitter 20 again, wherein a portion thereof is reflected from the interface 22 to coincide with beam 19 and being reflected from interface 17 of beam splitter 15 such that it also coincides with beam 27.

The beam of measuring light 27 leaving the optical delay section 5 is thus composed of three different partial beams: beam 19 reflected from retro reflector 23, beam 21a reflected from retro reflector 29a and beam 21b reflected from retro reflector 29b. Each of these beams 19, 21a and 21b has traversed a different optical path within the optical delay section 5. Optical path lengths of these optical paths can be adjusted as follows: retro reflector 29a is mounted on a linear translation table 33a comprising an actuator or motor 35a to displace the retro reflector 29a in a direction 37a oriented parallel to the beam 21a. Motor 35a is controlled by a computer 39 to change a length of the optical path which beam 21a experiences between traversing the interface 17 of beam splitter 15 the first time and traversing this interface 17 the second time. The linear translation table 33a further comprises a distance measuring system 45a including a distance measuring interferometer 47a emitting a measuring beam 49a which is directed onto a mirror 51a fixed to a backside of retro reflector 29a to detect a translational position of the retro reflector 29a on the linear translation table 31a, wherein detection signals of the interferometer 47a are supplied to the computer 39.

Similarly, the retro reflector 29b is mounted on a linear translation table 33b such that a position of the retro reflector 29b can be changed in a direction 37b parallel to beam 21b by a motor 35b under the control of computer 39, wherein an exact position of the retro reflector 29b can be determined by a distance measuring system 45b including a distance measuring interferometer 47b.

The retro reflector 23 is mounted on a support 41 via at least one piezo electric element 43 which is also controlled by the computer 39 to precisely adjust a length of the optical path which beam 19 experiences between its first reflection from the interface 17 of beam splitter 15 and its second reflection therefrom. In the illustrated embodiment, three piezo electric elements 43 are used for mounting and controlling a position and an orientation of the retro reflector.

The three optical path lengths of the optical delay section 5 are used to provide two different adjustable path length differences as follows: a distance between beam splitting interface 22 and retro reflector 23 is indicated by reference numeral b1 in Figure 1, and a distance between beam splitting interface 22 and retro reflector 29b is indicated by reference numeral b2. Circle 91b represents the length b1 such that it is easy to understand that the optical delay section 5 provides an optical path difference $\Delta b$ which is the difference between path length b2 and path length b1.

Similarly, a distance between beam splitting interface 17 and retro reflector 23 is indicated by reference numeral a1, whereas a distance between beam splitting interface 17 and retro reflector 29a is indicated by reference numeral a2. A circle 91a represents the path length a1, and $\Delta a$ is a further optical path difference provided by the optical delay section 5, wherein $\Delta a$ is the difference between path length a2 and path length a1.

An additional beam splitter 16 having a beam splitting interface 18 is provided in the beam path of beam 21a. This additional beam splitter 16 does not have a function of performing further beam splitting upon beam 21a. However, beam splitter 16 has a same configuration as beam splitter 20 and is provided in the beam path of beam 21a in particular for the purpose that beam 21a experiences a same dispersion and other optical effects as beam 19 traversing beam splitter 20. Thus, beam 21a can be used in the test section 3 to produce an interference pattern when suitably superimposed with beam 19.

Further, light attenuators 30, 32 and 34 are disposed in the beam paths of beams 19, 21b and 21a, respectively. The light attenuators 30, 32 and 34 are used to adjust the light intensities of beams 19, 21b and 21a such that interference patterns of a sufficient contrast can be formed from measuring light having traversed the optical delay section 5 and the test section 3.

The beam of measuring light 27 having traversed the optical delay section 5 is focused by a collimating lens 55 onto a first end 57 of an optical fiber 59 which supplies the measuring light to the test section 3. The light is emitted from a second end 61 of the optical fiber 59 as a diverging beam 63 having substantially spherical wavefronts. The diverging beam 63 of measuring light traverses a beam splitter 73 and is collimated by an interferometer optics 65 which is schematically illustrated by one single lens in Figure 1. However, the interferometer optics 65 may typically comprise plural lenses to produce a suitable parallel beam 67 of measuring light having substantially flat wavefronts.

The beam 67 of measuring light emitted from the interferometer optics 65 traverses a plate 69 having opposite flat surfaces 68 and 71. Surface 71 is a semitransparent reference surface and oriented orthogonally to the beam 67 such that a portion of beam 67 is reflected from surface 71 and travels back to the interferometer optics 65. A portion of the measuring light reflected back from surface 71 is reflected from the beam splitter 73, traverses an aperture of a beam stop 77 for intercepting stray light, and traverses a camera optics 79 to be incident on a light detecting surface 81 of a detector 83. This results in that surface 71 is imaged onto the light detecting surface 81 of the detector 83. The plate 69 carrying the reflective surface 71 which is oriented orthogonal to the beam 67 can be slightly wedge-shaped such that surface 68 is not oriented exactly orthogonal to the beam 67 resulting in that light reflected from surface 68 is intercepted by beam stop 77 and does not contribute to background radiation incident on detector 83.

The test section 3 further comprises a mirror 87 having a mirror reference surface 85 which is also oriented orthogonal to beam 67. Mirror surface 85 and semitransparent surface 71 together form an optical cavity of a length $z_1$. An optical element 101 to be tested is disposed within the cavity formed by mirror surface 85 and semitransparent surface 71. The optical element 101 to be tested has two flat opposite surfaces 103 and 105. Further, the optical element 101 has a lateral extension relative to the beam 67 which is smaller than a diameter of the beam 67. Thus, a first portion of the beam 67 having traversed the semitransparent surface 71 is incident on surface 103 of optical element 101 whereas a second portion of the beam 67 having traversed semitransparent surface 71 passes by and will not interact with the optical element 101 to be directly reflected from mirror surface 85.

The optical element 101 is oriented such that its surface 103 is oriented substantially orthogonal to the beam 67 and such that also surface 105 is substantially orthogonal to the beam 67.

The measuring light bypassing the optical element 101 and reflected from the mirror surface 85 is incident on the light detecting surface 81 in a ring-shaped outer portion thereof, where it is superimposed with measuring light directly reflected from semitransparent surface 71. The superimposed light reflected from the mirror 85 and reflected from semitransparent surface 71 may generate an interference pattern on the light detecting surface 81. Figure 2 shows an exemplary image 150 detected by the detector 83, wherein the ring-shaped portion is indicated with reference numeral 154. However, the measuring light has a coherence length which is significantly smaller than the distance $z_1$ between mirror surface 85 and semitransparent surface 71. Therefore, according to the principles of white light interferometry, a detectable interference pattern will only be formed if an optical path difference provided by the optical delay section 5 corresponds to the optical path difference between surfaces 71 and 85. In particular, an interference effect may be detected if the following relation is fulfilled:

$$\Delta b - z_1 < lc \ , \qquad\qquad (1)$$

wherein

$\Delta b = b_2 - b_1$     is one of the optical path differences provided by the optical delay section 5, and
$lc = \lambda_0^2 / \Delta\lambda$     represents the coherence length of the measuring light, wherein

$\lambda_0$     represents an average wavelength of the measuring light and

$\Delta\lambda$     represents a spectral width of the measuring light, wherein the spectral width may be determined as a full width half maximum (FWHM).

A portion of the measuring light reflected from surface 103 of the optical element 101 is incident on an inner circular portion 152 of the light detecting surface 81 of the detector 83 where it is superimposed with light directly reflected from semitransparent surface 71. The light reflected from the surface 103 will form an interference pattern with the light reflected from surface 71 if an optical path difference provided by the optical delay section 5 will correspond to an optical path difference provided between surfaces 103 and 71. In particular, an interference pattern may be observed if the following relation is fulfilled:

$$\Delta a - z_2 < lc \ , \qquad\qquad (2)$$

wherein

$\Delta a = a_2 - a_1$     is the other one of the optical path differences provided by the optical delay section 5, and

$z_2$          represents a distance between surfaces 103 and 71.

A further interference pattern may be generated on the inner circular portion 152 of the light detecting surface 81 from light which has traversed the surface 103 and is reflected from surface 105 of the optical element 101 and which is superimposed with light which has traversed the optical element 101 through its surfaces 103 and 105 and is reflected from the mirror surface 85. This light will contribute to an interference pattern formed on the light detecting surface 81 if the following relation is fulfilled:

$$\Delta a - z_3 < lc \ , \qquad\qquad (3)$$

wherein

$z_3$     represents a distance between mirror surface 85 and surface 105 of the optical element 101.

Still further, an interference pattern can be formed on the inner circular portion 152 of the light detecting surface 81 from light reflected from surface 103 which is superimposed with measuring light which has traversed surface 103 and is reflected from surface 105 of the optical element 101. This light will contribute to an interference pattern on the detector if the following relation is fulfilled:

$$\Delta a - n d < l c \, , \qquad\qquad (4)$$

wherein

d     is a distance between surfaces 103 and 105 of the optical element 101,
n     represents a refractive index of a material of optical element 101.

With the above illustrated interferometer apparatus 1 it is possible to determine optical properties of the optical element 101 with a high accuracy.
For an exemplary illustration of such measurement it is assumed that the optical element has a thickness d = 40 mm and a refractive index n = 1.5.
Further, the piezo electric actuator 43 is able to adjust a position of the retro reflector 23 in a direction of beam 19 within a range h = 90 $\mu$m and the coherence length of the measuring light is set by interference filter 12 to be $1_c$ = 30 $\mu$m. The distance $z_1$ between mirror surface 85 and semitransparent surface 71 is adjusted to fulfill

$$z_1 = (2n + 1)d + 0.500h = 160.0500 \, \text{mm} . \qquad\qquad (5)$$

The distance $z_2$ between surface 103 of the optical element 101 and the semitransparent surface 71 is adjusted to fulfill:

$$z_2 = n d + 0.333 h = 60.0300 \, \text{mm} . \qquad\qquad (6)$$

The distance $z_3$ between surface 105 of optical element 101 and the mirror surface 85 then fulfills:

$$z_3 = n d + 0.666 h = 60.0600 \, \text{mm} , \qquad\qquad (7)$$

and the optical thickness of the optical element 101 fulfills:

$$n d = 60.0000 \, \text{mm} . \qquad\qquad (8)$$

The distance $b_1$ between beam splitting interface 22 and retro reflector 23 can be adjusted within a range from

$$b_1 = 100 \, \text{mm} ... 100 \, \text{mm} + h = 100.090 \, \text{mm} \qquad\qquad (9)$$

by actuating the piezo electric elements 43.

The distance $b_2$ between beam splitting interface 22 and retro reflector 29b is adjusted to fulfill:

$$b_2 = b_1 + (2n + 1)d = 260.0000\,\text{mm}, \qquad (10)$$

by appropriately actuating motor 35b under the control of the length measuring system 45b.

The distance $a_2$ between beam splitting interface 17 and retro reflector 29a is adjusted to fulfill:

$$a_2 = a_1 + nd - 0.166h = 2s + b_1 + nd - 0.1666h = 189.9850\,\text{mm}, \qquad (11)$$

Having performed these adjustments, it is advantageous to wait a suitable time until thermal equilibrium is reached with the optical element 101 disposed in the cavity formed between mirror surface 85 and semitransparent surface 71.

Thereafter, a measurement is performed as follows: the position of retro reflector 23 is scanned through the range h in N steps, wherein N is determined such that the position of the retro reflector 23 is changed between subsequent steps by an amount which is substantially smaller than the wavelength $\lambda$ of the measuring light. For example, this amount is less than $0.1\,\lambda_0$.

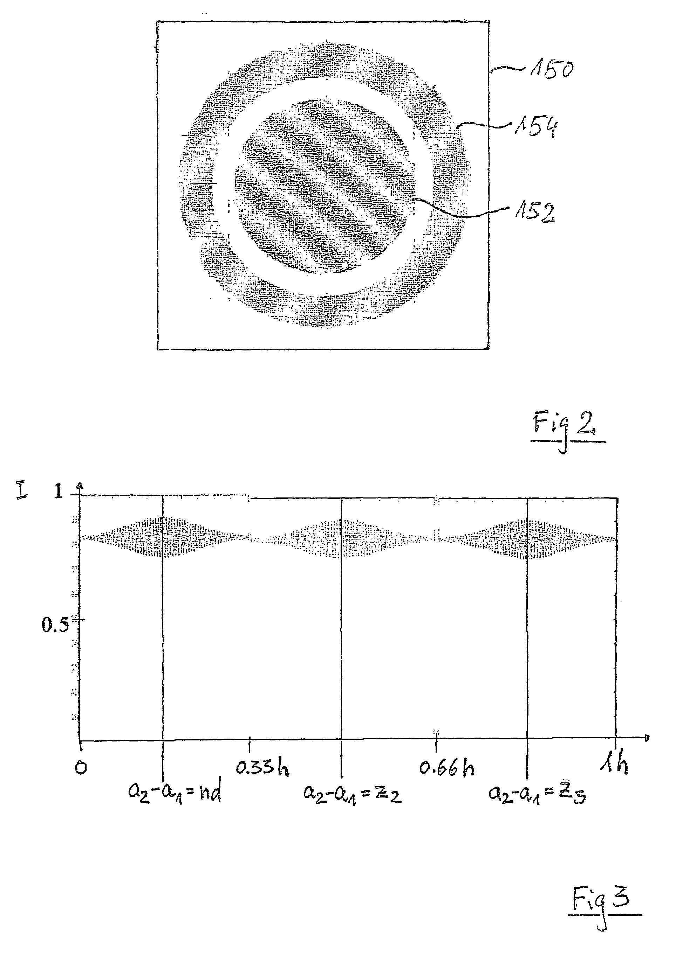

Figure 3 schematically shows a light intensity detected by an exemplary pixel of the detector 83 within the inner circular surface portion 152 of light detecting surface 81 obtained during such scan. The light intensity is modulated by three different interferences: when the scan starts at Oh, substantially no interference takes place due to the low coherence length $l_c$ of the measuring light. Then, an increasing modulation of the intensity takes place due to an interference between light reflected from surface 103 of the optical element and surface 105 of the optical element 101, reaching a maximum at about 0.167h which corresponds to $a_2 - a_1 = nd$. Thereafter, this interference is reduced with increasing displacement of the retro reflector 23 during the scan. A next interference is caused by a superposition of light reflected from surface 103 of the optical element 101 and light reflected from semitransparent surface 71 which reaches a maximum at about 0.500h which corresponds to $a_2 - a_1 = z_2$. A still further maximum of an interference is achieved at a position of about 0.833h which corresponds to $A_2 - A_1 = z_3$ and which is caused by a superposition of light reflected from mirror surface 85 and light reflected from surface 105 of optical element 101.

Thus, the physical properties nd, $z_2$ and $z_3$ can be determined within one single scan of the piezo electric actuators 43 for each pixel of the detector 83 within the inner circular portion 152 of light detecting surface 81 onto which the surfaces 103 and 105 of the optical element 101 are imaged. Further, the distance $z_1$ between mirror surface 85 and semitransparent surface 71 can be determined in the same scan by evaluating light intensities of pixels of the outer ring portion 154 of the light detecting surface 81 onto which the mirror surface 85 is imaged with light bypassing the optical element 101.

By evaluating the detected light intensities in dependence of the scan position it is possible to determine the values of nd, $z_2$ and $z_3$ for each detector pixel within the inner circular portion. Since each pixel of the detector corresponds to a location on the surfaces 103 and 105 of the optical element, it is possible to determine the thickness d of the optical element by evaluating

$$d = z_1 - z_2 - z_3, \qquad (12)$$

for each such location, and it is also possible to determine the refractive index n by evaluating

$$n = \frac{OPD_{hv}}{2(z_1 - z_2 - z_3)}, \qquad (13)$$

for each such location, wherein $OPD_{hv}$ represents the measured product nd, which is the optical path difference between surfaces 103 and 105 of the optical element 101.

It is an advantage that the above optical properties of the optical element 101 can be determined from measurements within one single scan of the piezo electric actuators 43. Such scan can be performed within a relatively short time, and it is in particular possible to assume that a thermal configuration of the whole setup will not change during such scan. This is an advantage compared to conventional methods for example known from international patent application no. PCT/EP2006/002434 which required separate measurements involving handling of the optical element between subsequent measuring steps wherein each handling of the optical element involved changing the thermal and mechanical configuration of the setup.

In the above method, values of nd, $z_1$, $z_2$ and $z_3$ are determined for respective pixels from measured intensity values depending on the scan position, wherein the respective values of nd, $z_1$, $z_2$ and $z_3$ are determined from the scan positions at which the maximum values of the measured intensities within each of the respective ranges from 0 to 0.33h, from 0.33h to 0.66h and from 0.66h to h are achieved. Since the intensity values are only obtained at discrete values determined by the step width $z_{step}$ of the optical path lengths differences and since the measured intensity values are also effected by detector noise, it is advantageous to determine the values of nd, $z_1$, $z_2$ and $z_3$ by fitting a model function to the measured intensities. The following model function has proved to be suitable:

$$I(z) = I_0 + A \cdot e^{-c \cdot \left( \frac{2\Delta\lambda(z-z_0)}{\lambda_0^2} \right)^2} \cdot cos\left( \frac{4\pi}{\lambda_0}(z - z_0) \right), \qquad (14)$$

wherein

$I_0$     represents a constant light portion,

A     represents a modulation due to interference,

c     is a constant depending on a coherence function of the measuring light,

$\lambda_0$     represents the average wavelength of the measuring light,

$\Delta\lambda$     represents a spectral width (FWHM) of the measuring light,

z     represents a position of the retro reflector 23, and

$z_0$     represents the property to be determined, which is nd, $z_1$, $z_2$ and $z_3$, respectively.

When applied to the present scan procedure, where z is changed in subsequent steps by a step value $z_{step}$, the above function can be re-written as:

$$I(i) = I_0 + A \cdot e^{-c \cdot \left( \frac{2\Delta\lambda \cdot z_{step}(i-i_0)}{\lambda_0^2} \right)^2} \cdot cos\left( \frac{4\pi}{\lambda_0} \cdot z_{step}(i - i_0) \right), \qquad (15)$$

wherein

i  represents a number of the step, and

$i_0$  represents the value corresponding to the value $z_0$ which is to be determined.

It is advantageous to perform a global constrained Gauß fit of the measured data to the above function, wherein not only $i_0$ is a free parameter of the fit but when also other parameters of the function are allowed to be parameters of the fit. For example, the parameters $\lambda_0$, $\Delta\lambda$, $i_0$, $z_{step}$, $I_0$, A and c can be used as free parameters of the fit while applying constraints of these parameters wherein the constraints define limitations to the respective parameters. The limitations are defined as ranges about the expected values of the respective parameters. To give an example, the following ranges can be used:

$\delta\lambda_0$ = 1% as a relative uncertainty of the average wavelength $\lambda_0$, having an expected value of 632.8 nm,

$\delta\Delta\lambda$ = 10 % as a relative uncertainty of the wavelength range $\Delta\lambda$, having an expected value of 20 nm,

$\delta i_0/N$ = 30 % as a relative uncertainty of the maximum as a percentage of the total number of measured values, $i_0/N$ having an expected value of 0.5, assuming that a maximum of the interference is located at a center of a scan range of the piezo electric actuator,

$\delta z_{step}$= 10 % as the relative uncertainty of the step $z_{step}$, having an expected value of 0.026 $\mu$m,

$\delta I_0$ = 5 % as the relative uncertainty of a constant portion $I_0$, having an expected value of 0.60,

$\delta A$ = 5 % as the relative uncertainty of the modulation A, having an expected value of 0.28, and

$\delta c$ = 10 % as the relative uncertainty of a coherence function of the measuring light, c having an expected value of 0.693.

A least square fit can be used to determine the above mentioned free parameters of the model function resulting in a relatively accurate determination of desired values $i_0$ which then determine the values of nd, $z_1$, $z_2$, $z_3$ respectively.

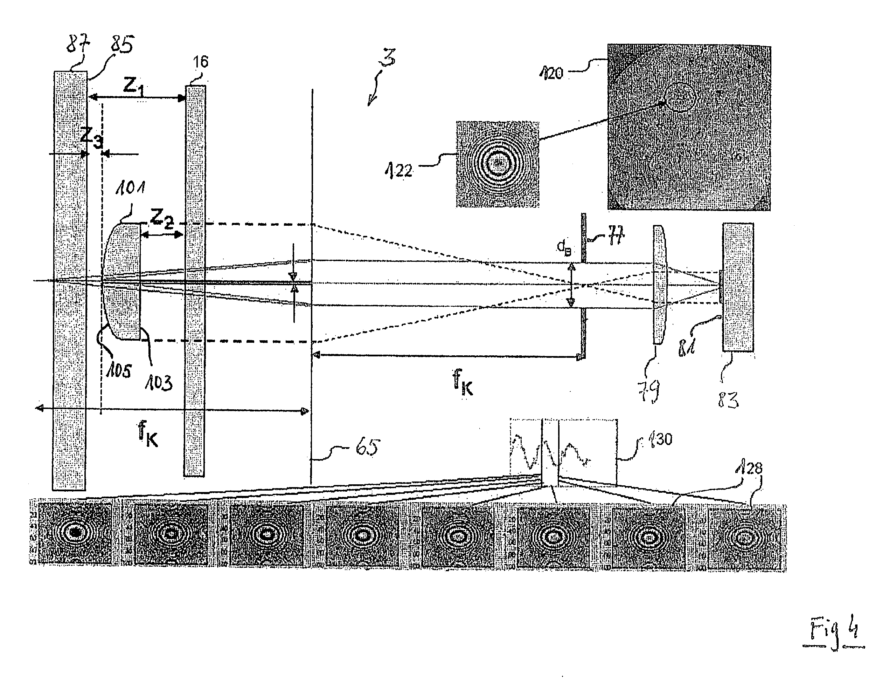

Figure 4 illustrates a test section 3 of a further embodiment of the present invention. The test section comprises a mirror 67 having a mirror surface 85 and a transparent plate 69 having a semitransparent reference surface 71 disposed at a distance $z_1$ from mirror surface 85 such that an optical cavity is formed between mirror surface 85 and semitransparent surface 71. The illustration of the test section 3 in Figure 4 is simplified in that a collimating optics is only indicated by its main plane 65 and in that a beam splitter 73 as shown in Figure 1 is not represented in Figure 4.

An optical element 101 to be tested is disposed in the optical cavity. The optical element 101 is a lens having a flat front surface 103 and a curved back surface 105. However, it is possible to determine a thickness d of the lens 101 and a refractive index of a lens material by using the above illustrated method. A typical image detected by detector 83 is indicated at reference numeral 120. An enlarged portion 122 of this image shows interference fringes generated by the cavity formed between the front and back surfaces 103, 105 of the optical element 101. Under certain circumstances, a center of these interference fringes may be disposed outside of the center of image 120 since the portion of surface 105 contributing to the interferogram is generally not exactly orthogonal to a main axis of the collimating lens 65.

Reference numeral 128 indicates plural image portions which are subsequently detected during a scan of the optical path differences provided by the optical delay section 5, and reference numeral 130 represents a detected light intensity of a central pixel of the image portions 128 in dependence of the scan position.

With such method it is possible to determine both a thickness and a refractive index of an optical lens with one single measuring scan.

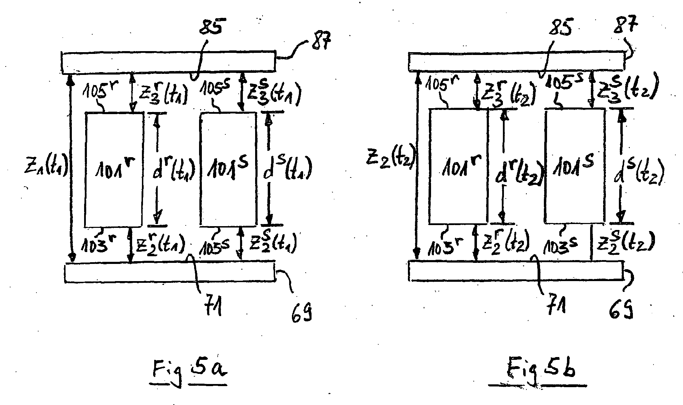

A method of determining changes of optical properties of a material is illustrated with reference to Figures 5a and 5b. A sample block $101^s$ having parallel front and back surfaces $103^s$, $105^s$ is disposed in an optical cavity between a surface 71 of a transparent plate 69 and a mirror surface 85 of a mirror 87. A reference block $101^r$ made of a same material as sample $101^s$ and having substantially the same dimensions as the sample $101^s$ is disposed in the same cavity adjacent to the sample $101^s$.

By using the above illustrated methods it is possible to determine a length $d^r(t1)$ of reference block $101^r$ and a length $d^s(t1)$ of sample block $101^s$ at a time t1 when the measurement is made. It is also possible to determine a refractive index $n^r(t1)$ of reference block $101^r$ and refractive index $n^s(t1)$ of sample block $101^s$ at the time t1. Further, it is possible to determine a length difference

$$\Delta d(t1) = d^r(t1) - d^s(t1) \qquad (16)$$

between the reference block $101^r$ and the sample block $101^s$.

Thereafter, the sample block $101^s$ is exposed to a predetermined amount of radiation. This can be achieved by exposing the sample block $101^s$ to a predetermined number of light pulses having a known duration and intensity generated from an ArF-laser, for example.

Thereafter, the measurement illustrated above with reference to Figure 5a is repeated at a time t2 as represented in Figure 5b. In particular, the refractive index $n^{s(t2)}$ of the sample block $101^s$ is determined as well as $\Delta d$ (t2). By comparing the values of $n^s$ and $\Delta d$ determined at t2 with those values determined at t1, it is possible to gain knowledge on light induced changes of optical properties of optical materials. Such changes are known as compaction or rarefaction in the art.

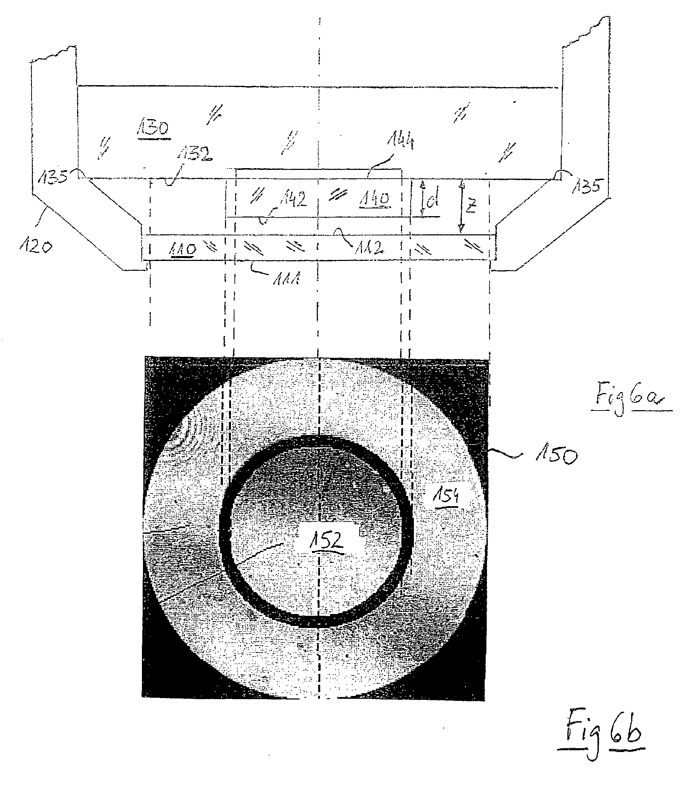

Figure 6 illustrates an embodiment of a method which allows to determine a position of an optical element relative to a mounting structure thereof. Figure 6 shows a section of a portion of an optical system comprising a mounting structure 120 for mounting plural optical components. One of these components is a transparent plate 110 which is mounted by the mounting structure 120 which forms a frame for the plate 110. For example, plate 110 may be a front plate of an objective lens system used for optical projection lithography applications. In practice, the position and orientation of the plate 110 relative to the mounting structure 120 will be subject to drifts due to effects such as relaxations and others, resulting in changes of the relative positions and orientations with time. The present method allows to monitor such drifts and to determine whether the position and orientation of the plate 110 relative to the mounting structure 120 is within predetermined thresholds prescribed by a design of the optical system. For this purpose, an arrangement of reference objects 130 and 140 is inserted into the mounting structure such that a flat front surface of reference object 130 is firmly abutted against a shoulder 135 provided by the mounting structure 120. When the reference object 130 is in abutting contact with the shoulder 135, the front surface 132 of reference object 130 is disposed at a distance z from a back surface 112 of the plate 110. Further, reference object 140 has a flat front surface 142 and a flat back surface 144, wherein the flat back surface 144 is in abutting contact with the front surface 132 of reference object 130. The reference object 140 has a thickness d corresponding to a distance between front and back surfaces 142, 144, and the reference object 140 also has a known refractive index n. For example, the reference objects 130 and 140 can be manufactured from Zerodur, which is known to have a very low thermal expansion. The thickness d of reference object 140 is chosen such that the optical thickness nd of object 140 differs from z by less than a coherence length of measuring light used for testing the position and orientation of the plate 110 relative to the mounting structure 120.

For such test, the arrangement shown in Figure 6 is disposed in the test section of the interferometer apparatus shown in Figure 1 such that the beam 67 of measuring light emitted from the collimating optics 65 is incident on the front surface 111 of plate 110. The optical delay section is adjusted such that one of the optical path differences generated by the optical delay section 5 corresponds to 2z. An interference pattern is detected by the camera as shown in Figure 6b. A central circular portion 152 of the detected image represents an interference between measuring light reflected from the front surface 142 of reference object 140 superimposed with measuring light reflected from the back surface 144 of the reference object 140.

An outer ring portion of the image represents an interference of measuring light reflected from the back surface 112 of plate 110 superimposed with measuring light reflected from the front surface 132 of reference object 130. From such image it is possible to compare the actual distance z between the plate 110 and reference object 130 which might have changed over time with the distance d between the front and back surface 142, 144 of reference object 140 which is supposed to have not changed over time.

It is thus possible to monitor the stability of the mounting structure 120 of the plate 110 over time. It is to be noted that due to the fact that the thickness d of the reference object 140 is chosen to correspond to z/n, it is possible to perform the above measurement with an optical delay section providing only one path difference such as the interferometer apparatus disclosed in international patent application having serial number PCT/EP2006/002434. If the distance z differs from nd by more than the coherence length of the measuring light, it is possible to perform the same simultaneous measurement at the inner circular portion 152 and the outer ring portion 154 of the detector by using the interferometer apparatus shown in Figure 1 wherein the optical delay section 5 is adjusted such that one of the provided optical path differences corresponds to 2z and the other optical path difference corresponds to 2dn.

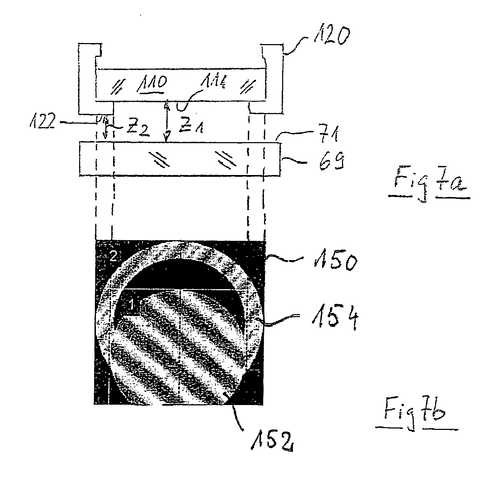

Figure 7 illustrates a further method of verifying a position and orientation of an optical component 110 relative to a mounting structure 120 thereof. In this example, the mounting structure 120 and optical component 110 are disposed in the test section 3 of the interferometer apparatus shown in Figure 1 such that a front surface 111 of the optical component 110 is disposed at a distance $z_1$, from semitransparent reference surface 71 of plate 69. Further, a front surface 122 of mounting structure 120 is manufactured such that it has optical quality sufficient to precisely reflect measuring light and to contribute to an interferogram generated by measuring light reflected from the front surface 122 of the mounting structure 120. This can be achieved by a suitable processing of the front surface 122. In the situation shown in Figure 7, the front surface 122 of the mounting structure 120 is disposed at a distance $z_2$ from semitransparent reference surface 71.

For performing the measurement, the optical delay section of the interferometer apparatus is adjusted such that one of the provided optical path differences differs from $2z_1$ by less than the coherence length of the measuring light and such that the other provided optical path difference differs from $2z_2$ by less than the coherence length of the measuring light.

An exemplary image detected by the camera 83 is shown in Figure 7b. The ring-shaped outer portion 154 of the detected image 150 represents an interference pattern generated from measuring light reflected from front surface 122 of the mounting structure 120 and superimposed with measuring light reflected from semitransparent reference surface 71. An inner circular portion 152 of the detected image 150 represents an interference pattern produced by measuring light which is reflected from the front surface 111 of optical component 110 and which is superimposed with measuring light reflected from the semitransparent reference surface 71. In the example shown in Figure 7b, the center of the inner circular portion 152 is displaced relative to a center of the outer ring portion 154 for illustrative purposes to exemplify that the inner circular position 152 and the outer ring portion 154 are not necessarily measured simultaneously. For example, they can be measured subsequently, in particular when an interferometric apparatus having single section providing only one optical path length.

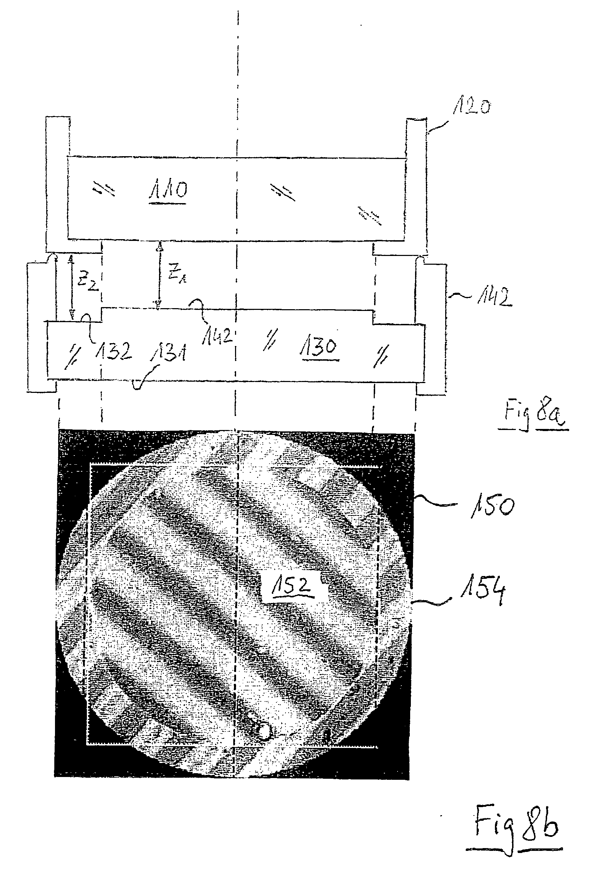

Figure 8 illustrates a further example of a method for testing a position and orientation of an optical element 110 relative to a mounting structure 120 thereof. The optical element 110 and mounting structure 120 have a similar configuration as those illustrated above with reference to Figure 7. The method illustrated with reference to Figure 8, however, uses a reference object 130 mounted in a frame 142 which is brought into a reproducible abutting contact with a front surface 122 of the mounting structure 120. The reference object 130 has a front surface 131 and a stepped back surface comprising a central circular surface portion 142 and a ring-shaped surface portion 132. The reference object 130 with its stepped surface portions 132 and 142 is configured such that the surface portion 142 is disposed at a distance z from front surface 111 of optical element 110, whereas the ring-shaped surface portion 132 is disposed at a distance $z_2$ from front surface 122 of the mounting structure 120. Further, the reference object 130 is configured such that the distance $z_1$ differs from distance $z_2$ by less than a coherence length of the measuring light used for testing.

The arrangement of the optical element 110 and mounting structure 120 is disposed in the test section 103 of the interferometer apparatus 1 shown in Figure 1 such that the frame 142 of the reference object 130 is in abutting contact with the front surface 122 of the mounting structure 120, and such that the measuring light 67 emitted from the collimating optics 65 is directly incident on the front surface 131 of reference object 130.

Figure 8b shows an exemplary image recorded by camera 83 with such configuration of the test section. A central portion 152 of the image 150 represents an interference pattern generated from measuring light reflected from the front surface 111 of the optical component 110 and superimposed with measuring light reflected from surface portion 142 of reference object 130. An outer ring portion 154 of the image 150 represents an interference pattern generated from measuring light reflected from the front surface 122 of mounting structure 120 and superimposed with measuring light reflected from surface portion 132 of reference object 130. Since the distances $z_1$ and $z_2$ differ from each other by less than the coherence length of the measuring light, it is possible to record image 150 with an adjustment of the optical delay section 5 such that only one optical path difference provided by the optical delay section 5 corresponds to $2z_1$ or $2z_2$.

With the above illustrated apparatus and methods it is possible to simultaneously detect different distances between optical components. According to an exemplary embodiment, this is achieved by an interferometer apparatus having an optical delay section providing two different optical path differences. According to other exemplary embodiments, this is achieved by a configuration of a test section of an interferometer apparatus such that a portion of the measuring light interacts with one of the optical components disposed in the test section while another portion of the measuring light bypasses this one component.

Embodiments of an interferometer apparatus comprise an optical delay section including a light input, a light output, at least two beam splitters disposed in an optical path between the light input and the light output and arranged to provide at least three optical path lengths to the light traversing the optical delay apparatus. Embodiments of an interferometric method comprise directing a beam of measuring light into an optical cavity such that a first portion of the beam of measuring light interacts with an optical element and such that a second portion of the beam of measuring light bypasses the optical element.

While the invention has been described with respect to certain exemplary embodiments thereof, it is evident that many alternatives, modifications and variations will be apparent to those skilled in the art. Accordingly, the exemplary embodiments of the invention set forth herein are intended to be illustrative and not limiting in any way. Various changes may be made without departing from the spirit and scope of the present invention as defined in the following claims.

**EP 1 890 105 A1**

**Claims**

1.  An interferometer apparatus comprising

    a light source for generating measuring light of a coherence length;
    an optical delay section including

        a light input,
        a light output,
        at least two beam splitters disposed in an optical path between the light input and the light output and
        arranged to provide at least three optical path lengths to light traversing the optical delay apparatus, and
        at least two actuators to modify at least two of the at least three optical path lengths;

        a test section including

        a light input receiving a measuring beam directed towards an object disposed on the test piece holder, and
        a light output receiving light having interacted with the object; and
        a light detector including a light detecting surface.

2.  The interferometer apparatus according to claim 1, wherein the delay section and the test section are arranged such that the light input of the test section receives light emitted from the light output of the delay section.

3.  The interferometer apparatus according to one of claims 1 to 2, wherein the test section further includes a Fizeau surface.

4.  The interferometer apparatus according to claim 3, wherein the test section further includes a reflective surface substantially parallel to the Fizeau surface to form an optical cavity there between.

5.  The interferometer apparatus according to one of claims 1 to 4, wherein the optical delay section further includes three retro reflectors.

6.  The interferometer apparatus according to one of claims 1 to 5, wherein the optical delay system further includes at least one adjustable light attenuator to adjust relative light intensities of light

7.  The interferometer apparatus according to one of claims 1 to 6, wherein the at least two actuators include at least one piezo actuator.

8.  A method of testing an optical element having first and second surfaces using an interferometer system, the method comprising:

        disposing the optical element in an optical cavity formed between a first cavity surface and a second cavity surface such that the first surface of the optical element is oriented towards the first cavity surface and the second surface of the optical element is oriented towards the second cavity surface;
        directing a beam of measuring light into the optical cavity such that a first portion of the beam of measuring light interacts with the optical element and such that a second portion of the beam of measuring light bypasses the optical element;
        directing measuring light of the first beam portion having interacted with the optical element onto a first detector portion and directing measuring light of the second beam portion having bypassed the optical element onto a second detector portion which is different from the first detector portion; and
        determining at least one optical property of the optical element from light intensities detected by the first and second detector portions.

9.  The method according to claim 8, further comprising an optical delay apparatus in a beam path of the measuring light.

10. The method according to claim 9, wherein the optical delay apparatus provides at least three optical path lengths to the measuring light traversing the optical delay apparatus.

11. The method according to one of claims 8 to 10, further comprising adjusting the delay apparatus such that a difference

13

between two different optical path lengths provided by the optical delay apparatus differs from an optical path length between the first and second cavity surfaces by less than a coherence length of the measuring light.

12. The method according to claim 10 or 11, further comprising adjusting the delay apparatus such that a difference between two different optical path lengths provided by the delay apparatus differs from an optical path length between the first cavity surface and the first surface of the optical element by less than a coherence length of the measuring light.

13. The method according to one of claims 10 to 12, further comprising adjusting the optical delay apparatus such that a difference between two different optical path lengths provided by the delay apparatus differs from an optical path length between the second cavity surface and the second optical surface of the optical element by less than a coherence length of the measuring light.

14. The method according to one of claims 9 to 13, further comprising scanning one of the optical path lengths provided by the optical delay apparatus and recording images detected by the first and second detector portions at each of plural scan settings of the scanned optical path length.

15. The method according to claim 14, wherein the scanned optical path length is continuously changed within a scan range and wherein a difference between the scanned path length and one other path length provided by the delay apparatus becomes equal to an optical path length between the first cavity surface and the first optical surface of the optical element during the continuous scanning of the optical path length.

16. The method according to claim 15, wherein a difference between the scanned path length and the one other path length provided by the delay apparatus becomes further equal to an optical path length between the second cavity surface and the second optical surface of the optical element during the continuous scanning of the optical path length.

17. The method according to claim 15 or 16, wherein a difference between the scanned path length and the one other path length provided by the delay apparatus becomes further equal to an optical path length between the first optical surface and the second optical surface of the optical element during the continuous scanning of the optical path length.

18. The method according to one of claims 8 or 17, wherein the at least one optical property of the optical element includes a distance between the first and second surfaces of the optical element and a refractive index of the optical element.

19. The method according to one of claims 8 or 18, wherein the optical element and a reference optical element are simultaneously disposed in the optical cavity, wherein a first surface of the reference optical element is oriented towards the first cavity surface and a second surface of the optical element is oriented towards the second cavity surface, and wherein measuring light having interacted with the reference optical element is directed to a third detector portion which is different from the first and second detector portions.

20. The method according to claim 19, further comprising exposing the optical element and the reference optical element to different radiation doses between subsequent measurements of the optical element and the reference optical element in the cavity.

21. The method according to claim 20, wherein the at least one optical property includes a compaction and a rarefaction of a material of the optical element.

22. A method of manufacturing an optical element having opposite first and second surfaces using an interferometer system, the interferometer system comprising:

disposing the optical element in an optical cavity formed between a first cavity surface and a second cavity surface such that the first surface of the optical element is oriented towards the first cavity surface and the second surface of the optical element is oriented towards the second cavity surface;
directing a beam of measuring light into the optical cavity such that a first portion of the beam of measuring light interacts with the optical element and such that a second portion of the measuring light bypasses the optical element;
directing measuring light of the first beam portion having interacted with the optical element onto a first detector portion and directing measuring light of the second beam portion having bypassed the optical element onto a second detector portion which is different from the first detector portion; and

processing at least one of the first and second surfaces of the optical element based on light intensities detected by the first and second detector portions.

23. The method according to claim 22, wherein the processing of the optical surface of the optical element comprises at least one of milling, grinding, loose abrasive grinding, polishing, ion beam figuring, magneto-rheological figuring, and finishing the optical surface of the optical element.

24. The method according to claim 23, wherein the finishing comprises applying a coating to the optical surface.

25. The method according to claim 24, wherein the coating comprises at least one of a reflective coating, an anti-reflective coating and a protective coating.

26. A method of performing an interferometric measurement, the method comprising:

disposing an object in a beam path of measuring light of an interferometer apparatus, the interferometer apparatus including an optical delay section in the beam path for providing an adjustable optical path length;
adjusting the optical path length to a plurality of different values;
detecting at least one light intensity at each of the plurality of different values of the optical path length and producing intensity data corresponding to the detected light intensities at the plurality of different values of the optical path length;
performing a fitting procedure by adapting a model function to the intensity data, wherein the model function is a function of a value of the optical path difference provided by the optical delay section and at least one additional parameter, wherein the at least one additional parameter is a free parameter subjected to the fitting procedure such that the parameter can be changed for improving an adaption of the model function to the intensity data; and wherein the at least one additional parameter comprises at least one of:

a first parameter representing an average wavelength of the measuring light,
a second parameter representing a spectral width of the measuring light, and
a third parameter representing at least one of the plurality of different values of the optical path length.

27. The method according to claim 26, wherein the plurality of different values of the optical path length are substantially equally spaced, and wherein the third parameter represent a difference between adjacent values of the optical path length.

EP 1 890 105 A1

Fig 1

_Fig 2_

$$a_2 - a_1 = nd \qquad a_2 - a_1 = z_2 \qquad a_2 - a_1 = z_3$$

_Fig 3_

Fig 4

Fig 5a

Fig 5b

Fig 6a

Fig 6b

120

// *110* *114* //

122

$Z_2$   $Z_1$

71

69

*Fig 7a*

150

154

*Fig 7b*

152

Fig 8a

Fig 8b

**European Patent Office**

**EUROPEAN SEARCH REPORT**

Application Number

EP 06 01 6939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 872 755 A (KUECHEL MICHAEL [DE]) 10 October 1989 (1989-10-10) | 1-5,7 | INV. G01B9/02 |
| Y | * column 10, line 54 - column 12, line 38; figure 7 * | 6 | |
| Y | US 4 360 271 A (DOWNS MICHAEL J ET AL) 23 November 1982 (1982-11-23) | 6 | |
| A | * column 3, lines 16-34; figure 2 * | 1-5,7 | |
| Y | US 6 806 963 B1 (WAELTI RUDOLF [CH] ET AL) 19 October 2004 (2004-10-19) | 6 | |
| A | * paragraph [0004]; figure 4 * | 1-5,7 | |
| A | US 2004/141184 A1 (UEKI NOBUAKI [JP]) 22 July 2004 (2004-07-22) * abstract; figure 1 * | 1-7 | |

TECHNICAL FIELDS SEARCHED (IPC)

G01B

~~The present search report has been drawn up for all claims~~

| Place of search | Date of completion of the search | Examiner |
|---|---|---|
| Munich | 15 February 2007 | Dighaye, Jean-Luc |

European Patent
Office

Application Number

EP 06 01 6939

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7

European Patent
Office

**LACK OF UNITY OF INVENTION
SHEET B**

Application Number

EP 06 01 6939

The Search Division considers that the present European patent application does not comply with the
requirements of unity of invention and relates to several inventions or groups of inventions, namely:

1. claims: 1-7

   Interferometer with an optical delay section comprising two
   beam splitters to provide three optical path lengths, two of
   them being adjustable.
   ---

2. claims: 8-25

   Method of testing/manufacturing an optical element in a
   cavity, whereby a part of measuring light interacts with the
   element while another part bypasses it.
   ---

3. claims: 26-27

   Interferometry by detecting intensity and performing a
   fitting procedure.
   ---

**ANNEX TO THE EUROPEAN SEARCH REPORT
ON EUROPEAN PATENT APPLICATION NO.**    EP 06 01 6939

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2007

| Patent document cited in search report | | Publication date | Patent family member(s) | | Publication date |
|---|---|---|---|---|---|
| US 4872755 | A | 10-10-1989 | CA | 1316367 C | 20-04-1993 |
| | | | DE | 3707331 A1 | 15-09-1988 |
| | | | EP | 0281906 A2 | 14-09-1988 |
| US 4360271 | A | 23-11-1982 | DE | 2963043 D1 | 29-07-1982 |
| | | | EP | 0012748 A1 | 09-07-1980 |
| | | | WO | 7900506 A1 | 09-08-1979 |
| | | | JP | 55500039 T | 31-01-1980 |
| | | | JP | 60024404 B | 12-06-1985 |
| US 6806963 | B1 | 19-10-2004 | AT | 263356 T | 15-04-2004 |
| | | | AU | 1377601 A | 04-06-2001 |
| | | | WO | 0138820 A1 | 31-05-2001 |
| | | | DE | 50005933 D1 | 06-05-2004 |
| | | | EP | 1232377 A1 | 21-08-2002 |
| US 2004141184 | A1 | 22-07-2004 | CN | 1517672 A | 04-08-2004 |
| | | | JP | 2004226112 A | 12-08-2004 |

EPO FORM P0459

For more details about this annex : see Official Journal of the European Patent Office, No. 12/82

## REFERENCES CITED IN THE DESCRIPTION

### Patent documents cited in the description

- US 20040190002 A1
- EP 2006002434 A
- EP 2006002434 W